(19) **Europäisches Patentamt**

**European Patent Office**

**Office européen des brevets**

(11) **EP 0 938 956 B1**

(12) **EUROPEAN PATENT SPECIFICATION**

(45) Date of publication and mention
of the grant of the patent:
**22.03.2006 Bulletin 2006/12**

(51) Int Cl.:
***B27G 13/10*** *(2006.01)*     ***B27G 13/04*** *(2006.01)*
***B27F 1/16*** *(2006.01)*

(21) Application number: **96942682.4**

(22) Date of filing: **27.12.1996**

(86) International application number:
**PCT/JP1996/003895**

(87) International publication number:
**WO 1997/024208 (10.07.1997 Gazette 1997/30)**

(54) **INSERTED MILLING CUTTER**

FRÄSER MIT SCHNEIDEINSÄTZEN

FRAISE A DENTS RAPPORTEES

(84) Designated Contracting States:
**DE FR GB IT**

(30) Priority: **28.12.1995 JP 34337895**

(43) Date of publication of application:
**01.09.1999 Bulletin 1999/35**

(73) Proprietor: **Kanefusa Corporation**
**Niwa-gun,**
**Aichi 480-01 (JP)**

(72) Inventor: **NISHIO, Satoru**
**Niwa-gun,**
**Aichi 480-01 (JP)**

(74) Representative: **Kramer - Barske - Schmidtchen**
**European Patent Attorneys**
**Patenta**
**Radeckestrasse 43**
**81245 München (DE)**

(56) References cited:
**JP-A- 6 344 305**      **JP-A- 6 344 306**
**JP-A- 63 027 201**      **JP-T- 4 502 432**

• **MICROFILM OF THE SPECIFICATION AND DRAWINGS ANNEXED TO THE WRITTEN APPLICATION OF JAPANESE UTILITY MODEL, Application No. 196633/1981 (Laid-open No. 101705/1983) (MITSUO OI), 11 July 1983.**

**Description**

Technical Field

The present invention relates to a milling cutter for use in cutting wood, wood-based materials, synthetic resin materials and soft metal materials, or in like cutting operations, and more particularly to an inserted milling cutter for which the cutting radius is not substantially changed even if a blade is reattached after it has been sharpened.

Background of the Invention

Conventionally, various methods have been employed to attach a blade of a milling cutter of this type to a cutter body, including soldering, screw-fastening, or using a clamping wedge. However, when the blade is attached by soldering, for example, a change in cutting radius must be compensated by adjusting displacement of the spindle of the machine or a similar operation. Further, when the blade is attached by using a clamping wedge or similar methods, it takes time and labor to adjust the variation of the cutting radius. Therefore, milling cutters have been developed for which the cutting radius is not changed if the blade is sharpened, one of which is disclosed in Japanese Laid-Open Patent Publication No. 6-285813.

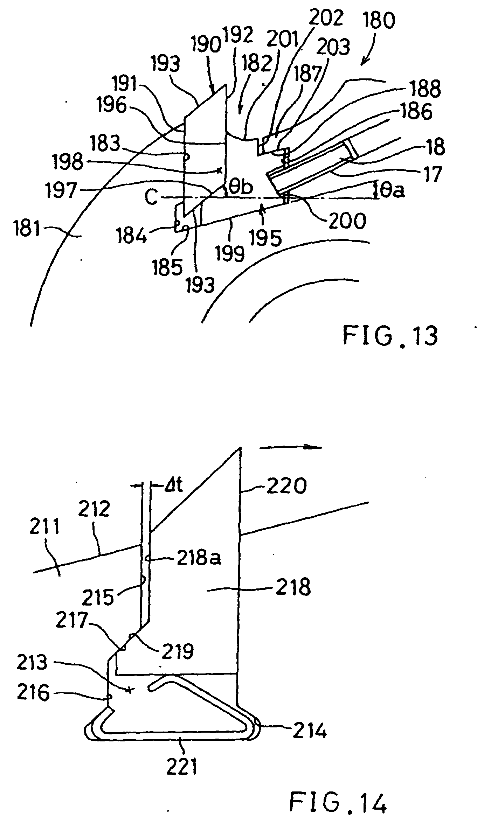

This prior art milling cutter is shown in FIG. 14 (showing a part of an assembly of a blade supporting disk and a cutter blade of a finger joint cutter). The blade supporting disk 211 has substantially the same thickness as the cutter blade 218. The disk 211 has a blade fitting groove 213 and an adjoining spring receiving groove 214 which are defined by cutting obliquely relative to the direction of rotation at a periphery 212 thereof. The cutter blade 218 is fitted into the blade fitting groove 213 such that it is removable in the thickness direction. The fitted cutter blade 218 protrudes from the periphery 212. The fitting groove 213 has a stepped rear surface in the direction of rotation which comprises a front portion 215, a back portion 216 and a sliding slant 217 formed at about 45° between the front portion 215 and the back portion 216. The cutter blade 218 has a sliding surface 219 having an inclination of about 45° for engaging the slant 217 from the inside. With the exception of the portion protruding from the periphery 212, the cutter blade 218 is configured to be closely fitted into the blade fitting groove 213. The cutter blade 218 has a cutting face 220 to be sharpened, on its front face in the direction of rotation. A spring 221 is fitted in the spring receiving groove 214 and is engaged with the bottom face of the cutter blade 218. With this construction, a decrease of protrusion of the blade of which the cutting face 220 has been sharpened is compensated by sliding the cutter blade 218 along the slant 217, so that the tip of the cutter blade 218 is positioned substantially at the same protrusion level even after the cutting face 220 has been sharpened.

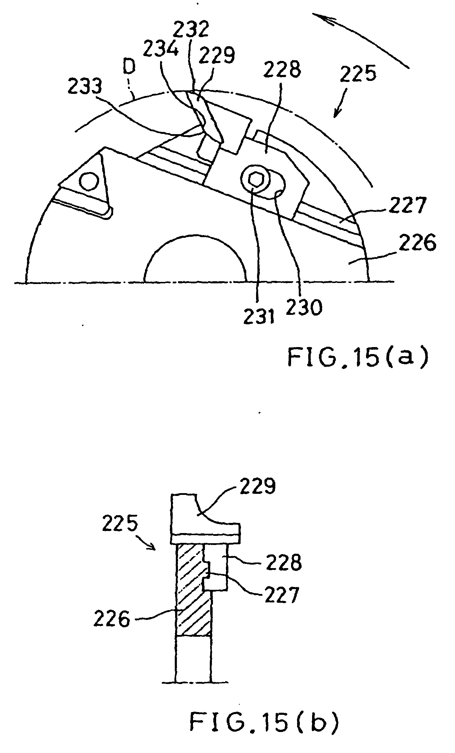

Another prior art milling cutter 225 having a different construction is shown in FIGS. 15(a) and 15(b). A body 226 of the milling cutter 225 has a guide rail 227 formed near its outer periphery on one side thereof and parallel to a flank 232 of a blade 229. A guide plate 228 to which the blade 229 is attached is slidably mounted on the guide rail 227. The guide plate 228 has a slot 230. The cutting face 233 of the blade 229 is in contact with a slant face 234 formed on the cutter body 226. With this construction, a decrease of protrusion of the blade is compensated by sliding the guide plate 228 along the guide rail 227 until the cutting face 233 of the blade 229 is brought in contact with the slant face 234, so that the blade tip is reliably positioned on an original cutting circle D. The guide plate 228 is then fixed by a set bolt 231 that is inserted through the slot 230.

However, with the former cutter, when the cutter blade 218 is fitted into the blade fitting groove 213 after the cutting face 220 thereof is sharpened, a clearance Δt is produced between a rear face 218a of the cutter blade 218 and the front portion 215 of the rear surface of the fitting groove 213. In this state, the cutter blade 218 is positioned by the spring 221 received in the spring receiving groove 214 of the fitting groove 213. In addition, such positioning of the cutter blade 218 is referenced from the front surface of the blade fitting groove 213 in the direction of rotation. Therefore, the cutter blade 218 can move backward in the direction of rotation or in a direction in which a cutting force is applied during operation of the cutter blade 218, so that the cutting radius is reduced.

Further, with the latter cutter, in which the blade 229 is fixed at the slot 230, the blade 229 is moved backward in the direction of rotation when a cutting force is applied thereon, so that the cutting radius is reduced.

JP-A-6 344 305 discloses an inserted milling cutter, comprising a cutter body having a plurality of blade grooves formed in the outer periphery thereof, a clamping wedge received within each of the blade grooves, a blade pressed against and fixed to a rear surface of each blade groove in the direction of rotation by the clamping wedge, and means for fixedly holding the clamping wedge. A change in cutting radius can be compensated, when a cutting phase of the blade is sharpened, by a screw mechanism provided inside the clamping wedge and by lifting the clamping wedge with respect to a bottom surface of the blade groove. This document forms the preamble of the independent claims 1 to 3.

Disclosure of the Invention

It is, accordingly, an object of the present invention to solve the above prior art problems and specifically to provide an inserted milling cutter having a simple construction in which a blade can be firmly fixed to a cutter body and for which cutting radius is not changed by sharpening the blade.

This object is solved by a milling cutter according to any one of claims 1 to 3. Preferred embodiments are defined by the dependent claims.

The invention provides an inserted milling cutter, comprising a cutter body having a plurality of blade grooves formed in the outer periphery thereof, a clamping wedge received within each of the blade grooves, a blade pressed against and fixed to a rear surface of each blade groove in the direction of rotation by the clamping wedge, and means for fixedly holding the clamping wedge, characterized in that means for compensating for a change in cutting radius when a cutting face of the blade is sharpened comprises a first slant formed on a bottom surface of each blade groove and a second slant formed on the clamping wedge which abuts against the first slant.

Further, the invention provides an inserted milling cutter, comprising a cutter body having a plurality of blade grooves formed in the outer periphery thereof, a clamping wedge received within each of the blade grooves, a blade pressed against and fixed to a rear surface of each blade groove in the direction of rotation by the clamping wedge, and means for fixedly holding the clamping wedge, characterized in that means for compensating for a change in cutting radius when a cutting face of the blade is sharpened comprises by a first slant formed on the blade and a second slant formed on the clamping wedge which abuts against the first slant.

Further, the invention provides an inserted milling cutter, comprising a cutter body having a plurality of blade grooves formed in the outer periphery thereof, a clamping wedge received within each of the blade grooves, a blade pressed against and fixed to a rear surface of each blade groove in the direction of rotation by the clamping wedge, and means for fixedly holding the clamping wedge, characterized in that means for compensating for a change in cutting radius when a cutting face of the blade is sharpened comprises both a first slant formed on a bottom surface of each blade groove and a second slant formed on the clamping wedge which abuts against the first slant and by a third slant formed on the blade and a fourth slant formed on the clamping wedge which abuts against the third slant.

As a result, these milling cutters are simple in a construction that includes a cutter body, blades, clamping wedges, and set screws (disk cams). The blades and the clamping wedges are fixedly pressed backward in the direction of rotation, in which a cutting force is applied during operation of the milling cutter, and radially inwardly toward the axis thereof so as to be more rigidly fixed directly to the cutter body, compared with prior art milling cutters having a blade adjusting mechanism.

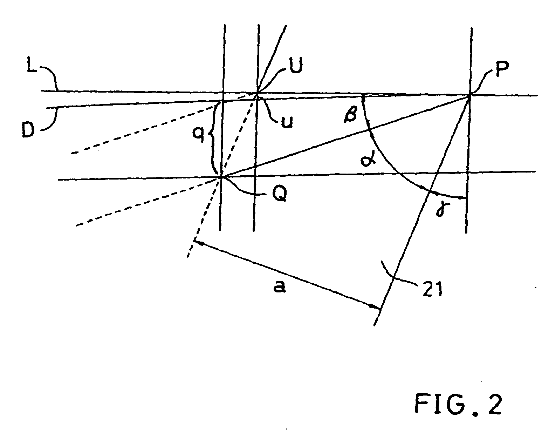

As for positioning accuracy of the tip of the blade, as shown in FIG. 2, when the cutting face of the blade is sharpened by a sharpening amount **a**, with a prior art cutter in which a change by such sharpening is not compensated, the tip comes to a position Q with a cutting radius displacement **q**, provided that the tip of the blade is initially positioned at P. In this respect, a path defined by the position of the tip of the blade that is reduced by sharpening is tangential line L of cutting circle D of the tip positioned at the initial position P. Specifically, the clamping wedge is constructed to slide at an angle θ relative to a direction perpendicular to the rear surface of the blade groove, so that the tip of the blade comes to a position U on the tangential line L with a cutting radius displacement **u.** Thus, the blade can be projected by the amount corresponding to the cutting radius displacement caused by sharpening. This accuracy of the displacement u is comparable to the machining tolerances of the milling cutter itself and has no substantial effect in use.

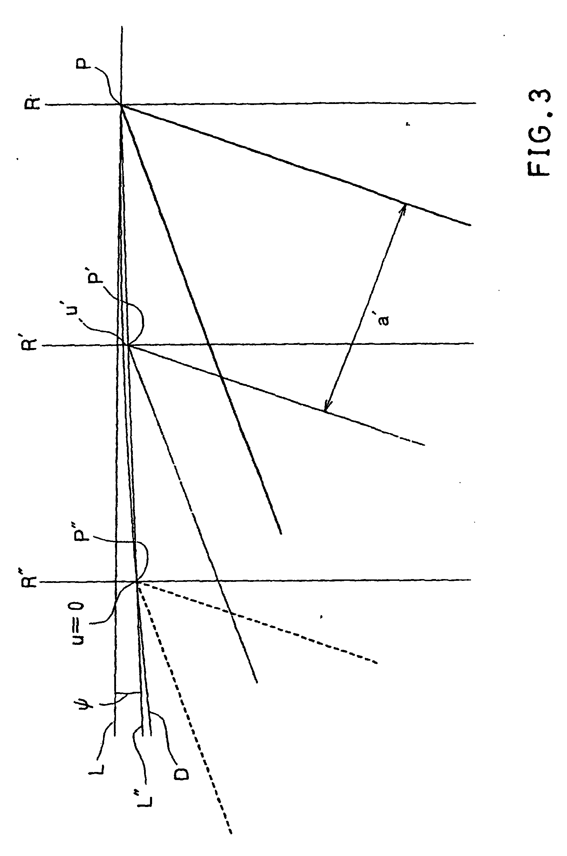

Further, as shown in FIG. 3, the angle θ may be determined to obtain a path L" of the tip in which the tip position P" at the time of the final use is positioned on the cutting circle D for the tip at the initial position P. Thus, the cutting radius at the final use is equal to the initial cutting radius. Similarly, the angle θ can be changed such that the maximum and minimum cutting radius during the period from the initial use to the final use are within a suitable tolerance range.

In the present invention, the means for fixedly holding the clamping wedges may comprise cams. Thus, the invention can be applied to a milling cutter having a thin cutter body such as a finger joint cutter.

Further, in the invention, the blade groove may have a front surface in the direction of rotation which has an eave-like slant generally parallel to the slant of the bottom surface of the blade groove, and the clamping wedge is configured to close the blade groove in the direction of the outer periphery whenever the clamping wedge slides along and is then fixed to the slant of the blade groove bottom surface. Thus, it is possible to prevent chips from entering the blade groove.

Further, in the invention, a clearance angle and an included angle of the blade at an outside diameter thereof can be changed depending on a radial position of the blade to thereby further compensate for differences in the amount of compensation for the changes in cutting radius that are caused by a difference in the radial position of the blade. Thus, this invention can be effectively applied to a profile cutter.

Brief Description of the Drawings

FIG. 1 is a fragmentary side view of a milling cutter according to a first embodiment of the present invention, with blades assembled in the blade grooves.
FIG. 2 is an explanatory diagram showing tip displacement relative to a cutting radius by sharpening a cutting face of the blade.
FIG. 3 is an explanatory diagram showing compensation for tip displacement.
FIG. 4 is a fragmentary side view of a milling cutter according to a second embodiment of the present invention, with blades assembled in the blade grooves.
FIG. 5 is a fragmentary side view of a modification of the second embodiment, with blades assembled in the blade grooves.
FIG. 6 is a fragmentary side view of a milling cutter according to a third embodiment of the present invention, with blades assembled in the blade grooves.
FIG. 7 is a fragmentary side view of a modification of the third embodiment, with blades assembled in the blade grooves.
FIG. 8 is a side view of a finger joint cutter.
FIG. 9 is a bottom view of the finger joint cutter.
FIG. 10 is a sectional view taken along line A-A of FIG. 8.
FIG. 11 is a fragmentary side view of a milling cutter according to a fourth embodiment of the present invention, with blades assembled in the blade grooves.
FIG. 12 is a view showing a blade of FIG. 11 as seen from the cutting face side thereof.
FIG. 13 is a fragmentary side view of a milling cutter in which both a blade groove and a blade have slants formed for compensation for tip displacement relative to cutting radius.
FIG. 14 is a fragmentary side view of a prior art blade of a finger joint cutter.
FIG. 15(a) is a fragmentary side view of another prior art milling cutter.
FIG. 15(b) is a sectional view of FIG. 15(a).

Best Modes for Carrying Out the Invention

(Embodiment)

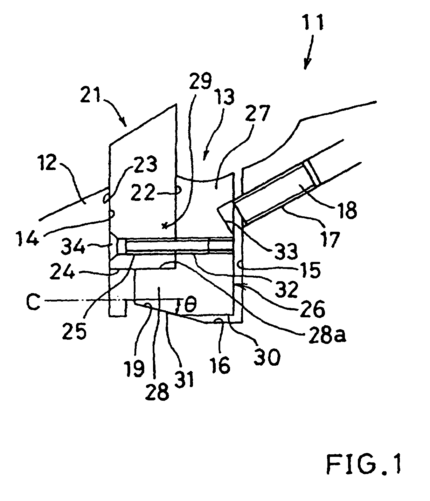

An embodiment of the present invention will now be explained with reference to the drawings. FIGS. 1 to 3 show a first embodiment of the present invention. FIG. 1 is a fragmentary side view, partly in cross-section, of a milling cutter 11 with blade 21 assembled onto a cutter body 12. The milling cutter 11 comprises the body 12, the blades 21 and clamping wedges 26. The body 12 has a tip diameter, for example, of 160 mm. The body 12 has a blade groove 13 formed in the outer periphery thereof and spaced 90° apart in the circumferential direction from each other. Each of the blade grooves 13 is adapted to receive each blade 21 and each clamping wedge 26. As shown in FIG. 1, the blade groove 13 is formed into a U-shape that comprises a generally vertical rear surface (or blade contact surface) 14 in the direction of rotation, a front surface 15 in the direction of rotation, which is parallel spaced apart by a predetermined distance from the rear surface 14, and a bottom surface 16. A screw hole 17 for threadably engaging a set screw 18 is formed in the front surface 15 with a downward inclination of a predetermined angle. The groove bottom surface 16 is formed with a slant 19 having an upward inclination at a predetermined angle (tan θ = tan (β+γ) - tan γ). The blade 21 and the clamping wedge 27 are integrally assembled in the groove 13.
The blade 21 has a cutting face 22 and a back face 23 on the opposite side of the cutting face 22. The back face 23 is formed vertically for contact with the rear surface 14 of the groove 13. The blade 21 further has a horizontal lower face 24. An assembling screw insertion hole 25 is formed horizontally through the blade 21 near the lower face 24. As shown in FIG. 2, the tip of the blade 21 is configured, for example, to have an included angle α (= 50°), a clearance angle β (= 20°) and a rake angle γ (= 20°). In this case, the predetermined angle θ is 25°24' from the above equation.
The clamping wedge 26 is formed into a generally L-shape that comprises a vertical portion 27 and a horizontal portion 28. The inside of the L-shaped clamping wedge 26 defines an assembling recess 29. The recess 29 is formed into a rectangular shape so as to permit abutment on the lower face 24 and the cutting face 22 of the blade 21. The horizontal portion 28 has a lower surface 30 that is formed with a slant 31 having the same inclination angle θ as the slant 19 of the groove bottom surface 16. The slant 31 is provided to horizontally hold the upper surface 28a of the horizontal portion 28. The vertical portion 27 has a screw hole 32 formed therethrough that is adapted to align with the assembling screw insertion hole 25 of the blade 21 when the blade 21 is assembled in the recess 29. Further, the vertical portion 27 has a receiving recess 33 formed at a predetermined position in the front surface thereof for receiving the tip of the set screw 18.

The blade 21 thus constructed is mounted in the assembling recess 29 with the screw insertion hole 25 aligned with the screw hole 32, and the blade 21 is fixedly assembled to the clamping wedge 26 by inserting a screw 34 through the aligned holes. The assembled blade 21 is inserted in the blade groove 13 such that the slant 31 of the clamping wedge 26 is in flat contact with the slant 19 of the groove bottom surface 16. In this state, the set screw 18 is tightened to push the clamping wedge 26. Thus, the clamping wedge 26 is slidably movable along the slant 19, while the blade 21 is slidably movable outwardly toward the outer periphery along the rear surface 14 of the groove 13 , so that the tip of the blade 21 is positioned on a predetermined tangential line L.

Positioning accuracy of the tip of the blade 21 relative to cutting circle D is now explained with reference to FIG. 2, which is an explanatory diagram thereof. The tip of the blade 21 is initially positioned at P, and when the cutting face of the blade 21 is sharpened by a sharpening amount a, the tip comes to a position Q without compensation for the change, with a displacement q relative to the cutting circle D. In this respect, the milling cutter 11 of this embodiment is constructed such that when the blade 21 is sharpened, the tip of the blade 21, which would otherwise have been reduced to position Q, comes onto the tangential line L of cutting circle D of the tip positioned at the initial position P. Specifically, the clamping wedge 26 is mounted on the bottom surface 16 of the blade groove 13 such that it is slidable toward the rear surface 14 of the blade groove 13 along the slant 19 of the bottom surface 16 having the inclination angle θ, so that the tip of the blade 21 comes to position U on the tangential line L with displacement **u** relative to cutting circle D.

With the milling cutter 11 having a blade tip with a tip diameter of 160 mm, an included angle α of 50°, a clearance angle β of 20° and a rake angle γ of 20°, when the total sharpening amount a after repeated sharpening operations is 2 mm, the displacement **q** is -0.855 mm while the displacement **u** is 0,028 mm (if a = 1 mm, q = -0.437 and **u** = 0.007 mm). Thus, the blade 21 can be extended by an amount corresponding to the displacement of cutting circle D caused by sharpening. This accuracy of 0.028 mm is comparable to the machining tolerances of the milling cutter 11 itself and has no substantial effect in use. It is noted that the displacements **q** and **u** are obtained by the following equations, respectively, in which **d** is a diameter of cutting circle D:

$$q = \sqrt{\left(\frac{d}{2}\right)^2 - \frac{ad \ \sin \ \beta}{\cos(\ \beta + \gamma \ )} + \frac{a^2}{\cos^2(\ \beta + \gamma \ )}} - \frac{d}{2}$$

$$u = \sqrt{\frac{a^2}{\cos^2 \gamma} + \left(\frac{d}{2}\right)^2} - \frac{d}{2}$$

In this embodiment, as described above, the clamping wedge 26 is adapted to slide along the slant 19 of the inclination angle e relative to a direction perpendicular to the rear surface 14 of the groove 13 such that path L defined by the position of the tip is a tangential line of the cutting circle D of the tip positioned at the initial position P. However, as shown in FIG. 3, the angle θ may be determined to obtain a path L" of the tip in which the tip position P" at the time of the final use (which means the state that any further sharpening is substantially impossible) is positioned on cutting circle D for the tip at initial position P. Specifically, it is determined such that tan θ = tan (β+γ) - tan (γ+φ), where φ is an angle defined at the tip position P by the tangential line L of the cutting circle D and the path L" and is half of the central angle at the tip positions P and P" in this embodiment. Thus, the cutting radius at the time of the final use is equal to the initial cutting radius. Here, u = 0, and a maximum displacement **u'**, which is obtained when half of the total amount a to be sharpened by the time of the final use is sharpened, = d/2 x cos φ - d/2. In the above case, **u'** = -0.006 mm. Similarly, the angle θ can be changed such that the maximum and minimum cutting radius during the period from the initial use to the final use are within a tolerable range.

In this embodiment, the blade 21, which is brought in flush contact with the assembling recess 29 of the clamping wedge 26, is fixedly assembled to the clamping wedge 26 by the screw 34. However, such a screw is not necessarily required, and a pin or matching convex and concave parts may be used for engagement instead of the screw 34.

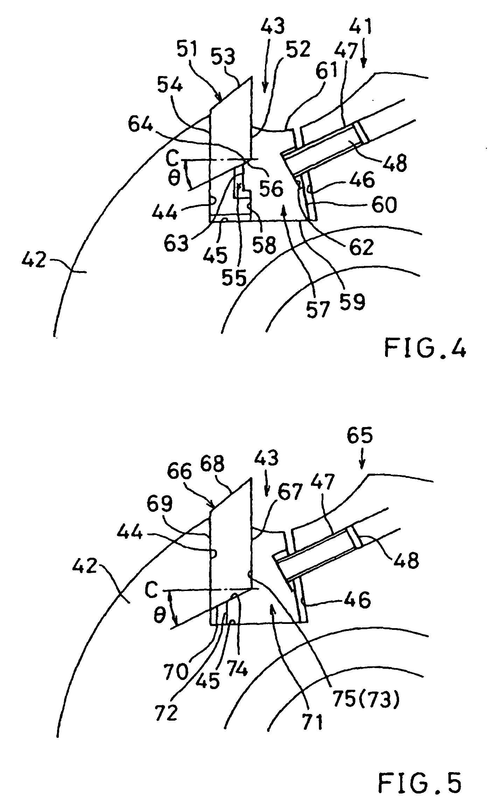

A second embodiment will next be explained with reference to FIG. 4. A milling cutter 41 comprises a cutter body 42, blades 51 and clamping wedges 57. Like the first embodiment, the cutter body 42 has a tip diameter of 160 mm and has blade grooves 43 formed in the outer periphery thereof and spaced 90° apart in the circumferential direction from each other, each of which is adapted to receive each blade 51 and each clamping wedge 57. The blade groove 43 has a generally vertical rear surface (or blade contact surface) 44 in the direction of rotation, a horizontal bottom surface 45 extending from the lower end of the rear surface 44, and a front surface 46 in the direction of rotation extending from the bottom surface 45 to the outer periphery of the body with an inclination of a predetermined angle. A screw hole 47 for threadably engaging a set screw 48 is formed in the front surface 46 with a downward inclination of a predetermined angle.

Further, the tip of the blade 51 is configured, similar to the blade 21 described above, to have an included angle α of 50°, a clearance angle β of 20° and a rake angle γ of 20°. The blade 51 has a cutting face 52, a flank 53, a back face 54 for contacting the rear surface 44, and a horizontal lower face. The cutting face 52 has an engagement recess 55 formed at a predetermined position thereof for engaging the clamping wedge 57. The upper surface of the recess 55 comprises a slant 56 inclined at a predetermined angle θ of 25°24' relative to line C that is perpendicular to the rear surface 44.

The clamping wedge 57 is formed into a generally rectangular shape in section, which comprises a blade joining surface 58 for contacting the cutting face 52 of the blade 51, a horizontal lower surface 59 for slidably contacting the bottom surface 45 of the blade groove 43, a front surface 60 parallel to the front surface 46 of the blade groove 43 and spaced apart by a predetermined distance therefrom, and an upper surface 61. Further, the clamping wedge 57 has a receiving recess 62 formed at a predetermined position in the front surface 60 thereof for receiving the set screw 48. The clamping wedge 57 also has an engagement projection 63 formed at a predetermined height position of the joining surface 58 for engagement with the recess 55 formed in the cutting face 52 of the blade 51. The upper surface of the projection 63 comprises a slant 64 for slidably contacting the slant 56 of the recess 55 at the same angle θ.

The projection 63 of the clamping wedge 57 is fitted into the recess 55 of the blade 51 with the respective slants 56 and 64 in contact with each other. In this state, the blade 51 is inserted in the blade groove 43 until the lower surface 59 of the clamping wedge 57 abuts against the blade groove bottom surface 45. Then, by pressing the screw 48 against the clamping wedge 57, the clamping wedge 57 slides along the bottom surface 45, and the blade 51 also slides along the rear surface 44 toward the outer periphery, where the slant 56 formed at the angle θ in the recess 55 of the blade cutting face 52 slides along the slant 64 formed in the projection 63 of the clamping wedge 57. Thus, the tip of the blade 51 is positioned on predetermined tangential line L.

With the milling cutter 41 thus constructed, as described above, by pressing the screw 48 against the clamping wedge 57, the clamping wedge 57 slides along the bottom surface 45, and the blade 51 also slides along the rear surface 44 toward the outer periphery, where the slant 56 formed at the angle θ in the recess 55 of the blade cutting face 52 slides along the slant 64 formed in the projection 63 of the clamping wedge 57. Thus, similar to the first embodiment, the change in cutting radius is compensated by the slants 56 and 64 inclined at the angle θ, and the tip of the blade 51 is positioned on a predetermined tangential line L. Here, it is noted that in the prior art cutters, in which the change in cutting radius by sharpening is not compensated, when the cutting face is sharpened by 2 mm in total by several sharpening operations, the cutting radius is reduced by 0.855 mm.

FIG. 5 shows a milling cutter 65 that is a modification of the milling cutter 41 described above. The milling cutter 65 also has the blade groove 43 formed in the cutter body 42 of the milling cutter 41, to which the same numerals are given and for which description is omitted. The tip of a blade 66 is configured, similar to the blade 51 described above, to have an included angle α of 50°, a clearance angle β of 20°c and a rake angle γ of 20°. The blade 66 has a cutting face 67, a flank 68, a back face 69 for contacting the rear surface 44, and a horizontal lower face. The lower face comprises a slant 70 having a downward inclination of a predetermined angle θ of 25°24' relative to line C that is perpendicular to the rear surface 44 of the blade groove 43. A clamping wedge 71 has a generally rectangular shape that is substantially the same as the clamping wedge 57 described above. The clamping wedge 71 has a rear surface 72 which in turn has a slant 74 having the same inclination as the slant 70 of the blade 66 and a blade receiving surface 75 for flush contacting the blade cutting face 67, which defines a receiving recess 73 at a predetermined height position thereof. The blade 66 is engaged with the receiving recess 73 of the clamping wedge 71 with both the lower face or slant 70 inclined at the angle θ and the cutting face 67 brought in contact therewith. In this state, the blade 66 is inserted into the blade groove 43 and is fixed by the set screw 48. By such insertion, the lower face or slant 70 of the blade 66 slides together with the slant 74 of the clamping wedge 71, and the blade 66 also slides along the rear surface 44 toward the outer periphery. Thus, the change in cutting radius is compensated by the slants 70 and 74 inclined at the angle θ and the tip of the blade 66 is positioned on a predetermined tangential line L.

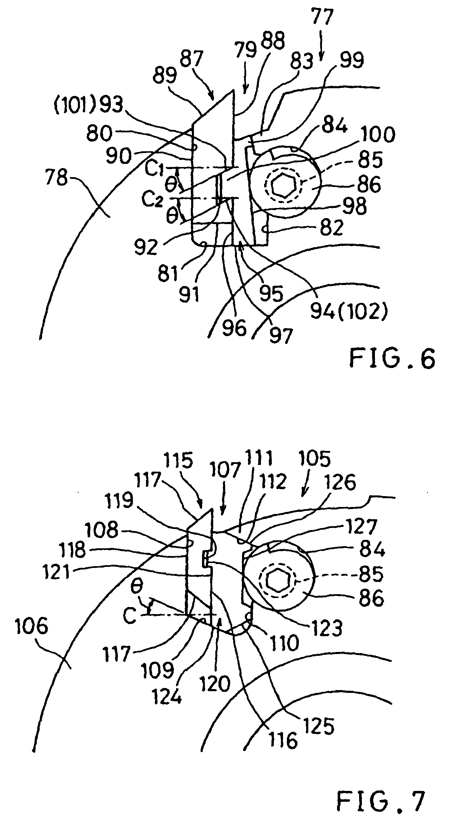

A third embodiment of the present invention will now be explained with reference to FIG. 6. A milling cutter 77 comprises a cutter body 78, blades 87 and clamping wedges 95. Like the above embodiments, the cutter body 78 has a tip diameter of 160 mm and has blade grooves 79 formed in the outer periphery thereof and spaced 90° apart in the circumferential direction from each other, each of which is adapted to receive each blade 87 and each clamping wedge 95. The blade groove 79 has a generally vertical rear surface (or blade contact surface) 80 in the direction of rotation, a horizontal bottom surface 81 extending from the lower end of the rear surface 80, and a front surface 82 in the direction of rotation extending from the bottom surface 81 to the outer periphery of the body and substantially parallel to the rear surface 80. The front surface 82 has an eave-like projection 83 formed on the outer peripheral portion thereof and extending into the blade groove 79. A circular recess 84 having a predetermined diameter and a predetermined depth is formed on the front surface 82 on at least one side surface of the body 78 and is open to the blade groove 79. A disc cam 86 is mounted in the circular recess 84 with a magnet 85 embedded in the center thereof. The blade groove 79 thus constructed receives the blade 87 and the clamping wedge 95.

A tip of the blade 87 is configured, similar to the above embodiments, to have an included angle $\alpha$ of 50°, a clearance angle $\beta$ of 20° and a rake angle $\gamma$ of 20°. The blade 87 has a cutting face 88, a flank 89, a back face 90 to be in contact with the rear surface 80. and a horizontal lower face 91. The cutting face 88 has an engagement recess 92 formed at a predetermined position thereof for engaging the clamping wedge 95. The upper surface and the lower surface of the recess 92 comprise slants 93 and 94 inclined at a predetermined angle $\theta$ of 25°24' relative to lines C1 and C2 perpendicular to the rear surface 80, respectively.

The clamping wedge 95 has a blade joining surface 96 to abut against the cutting face 88, a horizontal lower surface 97 for slidably contacting the bottom surface 81 of the blade groove 79, an inclined front surface 98 spaced apart by a predetermined distance from the front surface 82, and a projection 99 formed on the upper end thereof to abut against the eave-like projection 83 extending into the blade groove 79. The clamping wedge 95 also has an engagement projection 100 formed at a predetermined height position of the joining surface 96 for engagement with the recess 92 formed in the cutting face 88 of the blade 87. The upper and lower surfaces of the projection 100 comprise slants 101 and 102 for slidably contacting the slants 93 and 94 of the recess 92 at the same angle $\theta$, respectively.

The projection 100 of the clamping wedge 95 is fitted into the recess 92 of the blade 87 with the slants 101 and 102 in contact with the slants 93 and 94, respectively. In this state, the blade 87 is inserted into the blade groove 79 until the lower surface 97 of the clamping wedge 95 is brought in contact with the blade groove bottom surface 81. The disc cam 86 is then rotated to push the clamping wedge 95. As a result, the clamping wedge 95 slides along the blade groove bottom surface 81, and the blade 87 also slides along the rear surface 80 toward the outer periphery, where the slants 93 and 94 formed at the angle $\theta$ in the recess 92 of the blade cutting face 88 slides along the slants 101 and 102 formed in the projection 100 of the clamping wedge 95. Thus, the tip of the blade 87 is positioned on predetermined tangential line L.

FIG. 7 shows another example of the third embodiment. A milling cutter 105 has a tip diameter of 160 mm and has blade grooves 107 spaced 90° apart in the circumferential direction from each other. Each of the grooves 107 has a vertical rear surface 108 in the direction of rotation, a bottom surface or slant 109 extending from the lower end of the rear surface 108 and inclined downwardly at an angle $\theta$ (= 25°24') relative to line C that is perpendicular to the rear surface 108, and a front surface 110 extending from the end of the slant 109 and substantially parallel to the rear surface 108. The front surface 110 has an eave-like projection 111 having a slant 112 parallel to the slant 109 and formed on the outer end thereof to extend into the blade groove 107. Similar to the embodiment of FIG. 6, the circular recess 84 having a predetermined diameter and a predetermined depth is formed on the front surface 110 at least on one side surface of the body 106 and is open to the blade groove 107. The disc cam 86 is mounted in the circular recess 84 with the magnet 85 embedded in the center thereof. The blade groove 107 thus constructed receives a blade 115 and a clamping wedge 120.

The blade 115 has a tip on the upper and lower ends. Each of the tips, similar to the above embodiments, has an included angle $\alpha$ of 50°, a clearance angle $\beta$ of 20° and a rake angle $\gamma$ of 20°. The blade 115 has a cutting face 116, a flank 117, and a back face 118 for contacting the rear surface 108. The cutting face 116 has an engagement recess 119 formed in a substantially central position thereof for engaging the clamping wedge 120.

The clamping wedge 120 has a blade joining surface 121 to abut against the cutting face 116 on the upper and lower portions of the blade 115. The joining surface 121 has an engagement projection 123 formed at a predetermined height position thereof for engagement with the recess 119 of the blade 115. The clamping wedge 120 also has a slant 124 extending from the lower end of the joining surface 121, for slidably contacting the slant 109 of the blade groove 107, and an upward slant 125 extending from the end of the slant 124 and inclined at a predetermined angle toward the front surface 110 of the blade groove 107. Further, the clamping wedge 120 has a slant 126 formed on the upper end thereof for slidably contacting the eave-like slant 112 of the projection 111 extending into the blade groove 107. The clamping wedge 120 also has a recess 127 formed between the slants 126 and 125 for receiving the disc cam 86.

The projection 123 of the clamping wedge 120 is fitted in the recess 119 of the blade 115. In this state, the blade 115 is inserted into the blade groove 107 from the side thereof as the slants 124 and 126 of the clamping wedge 120 are brought in sliding contact with the bottom surface 109 inclined at the angle $\theta$ and the slant 112 of the projection 111, respectively. The disc cam 86 is then rotated to push the clamping wedge 120. As a result, the clamping wedge 120 slides along the blade groove bottom slant 109 and the slant 112, and the blade 115 also slides along the rear surface 108 toward the outer periphery. Thus, the tip of the blade 115 is positioned on predetermined tangential line L. In the milling cutter 105, the clamping wedge 120 is designed to be slidable along the slant 112 of the projection 111, which can advantageously prevent chips from entering the blade groove 107.

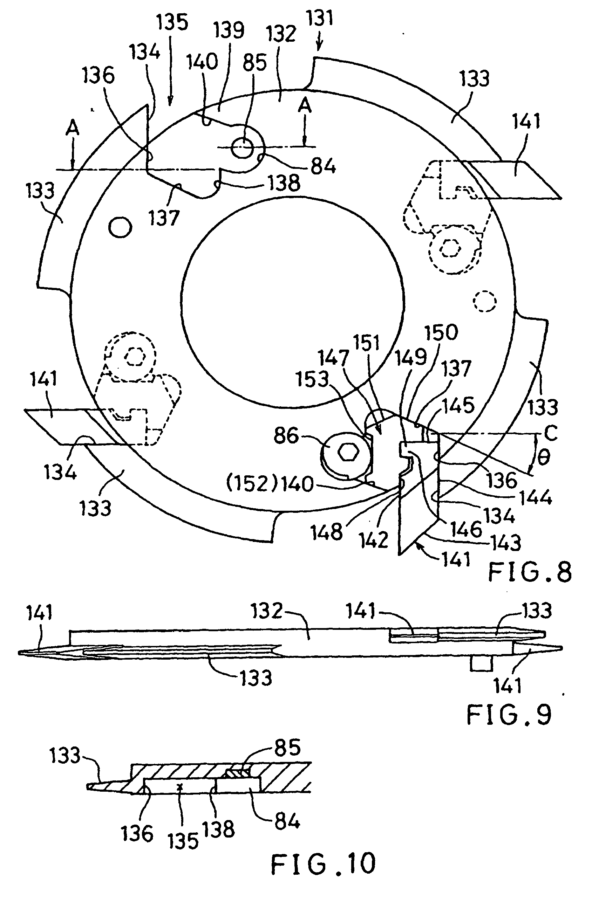

A construction having a blade and a clamping wedge fixed by the disc cam 86 is advantageously utilized in a milling curter, such as a finger joint cutter, having a cutter body that is too thin to use a set screw therein for fixing. Such a finger cutter is shown in FIGS. 8 to 10. FIG. 8 is a side view of a finger cutter 131, FIG. 9 is a bottom view, and FIG.

10 is a sectional view taken along line A-A of FIG. 8. A thin cutter body 132 of the cutter 131 has back fins 133 that are approximately half the thickness of the body 132 and formed in one side thereof on the periphery thereof in the diametrically opposed positions thereof. The other side of the cutter body 132 has similar back fins formed on the periphery thereof in the diametrically opposed positions thereof in a 90° spaced apart relation to the back fins on the one side thereof. Each of the back fins 133 has a blade guide face 134 formed on the front end in the direction of rotation. A blade groove 135 is formed in the body 132 to be continuous with the blade guide face 134 and is adapted to receive a blade 141 and a clamping wedge 147.

The blade groove 135 generally utilizes the same construction as the blade groove 107 of the milling cutter 105 described above. Specifically, the blade groove 135 comprises a vertical rear surface in the direction of rotation that is continuous with the blade guide face 134 of the back fin 133, a bottom surface or slant 137 extending from the lower end of the rear surface 136 and inclined downwardly at the angle θ (=25°24') relative to line C that is perpendicular to the rear surface 136, and a front surface 138 extending from the end of the slant 137 and substantially parallel to the rear surface 136. Similar to the embodiments of FIGS. 6 and 7, the circular recess 84 is formed on the front surface 110 and the disc cam 86 is mounted in the circular recess 84 with the magnet 85 in the center thereof. The front surface 138 also has an eave-like projection 139 having a slant 140 that is formed to be continuous with the circular recess 84 and that is parallel to the blade bottom surface slant 137 to extend into the blade groove 135. The blade groove 135 thus constructed receives the blade 141 and the clamping wedge 147.

A tip of the blade 141 is configured, similar to the above embodiments, to have an included angle α of 50°, a clearance angle β of 20° and a rake angle γ of 20°. The blade 141 has a cutting face 142, a flank 143, a back face 144 for contacting the rear surface 136, and a horizontal lower face 145. The cutting face 142 has an engagement recess 146 formed in a predetermined position thereof for engaging the clamping wedge 147.

The clamping wedge 147 has a blade joining surface 148 to abut against the cutting face 142. The joining surface 148 has an engagement recess 149 formed at a predetermined height position thereof for engagement with the engagement projection 146 of the blade 141. The clamping wedge 147 also has a slant 150 extending from the lower end of the joining surface 148 for sliding contact with the slant 137 of the blade groove 135, and an upward slant 151 extending from the end of the slant 150 and inclined at a predetermined angle toward the front surface 138 of the blade groove 135. Further, the clamping wedge 147 has a slant 152 formed on the upper end thereof for slidably contacting the slant 140 of the projection 139 extending into the blade groove 135. The clamping wedge 147 also has a recess 153 formed between the slants 152 and 151 for receiving the disc cam 86.

The engagement recess 149 of the clamping wedge 147 is engaged with the projection 146 of the blade 141. In this state, the blade 141 is inserted into the blade groove 135 from the side thereof as the slants 150 and 152 of the clamping wedge 147 are brought in sliding contact with the slant 137 of the blade groove 135 inclined at the angle θ and the slant 140 of the projection 139, respectively. The disc cam 86 is then rotated to push the clamping wedge 147. As a result, the clamping wedge 147 slides along the blade groove bottom slant 137 and the slant 140, and the blade 141 also slides along the rear surface 136 toward the outer periphery. Thus, the tip of the blade 141 is positioned on predetermined tangential line L.

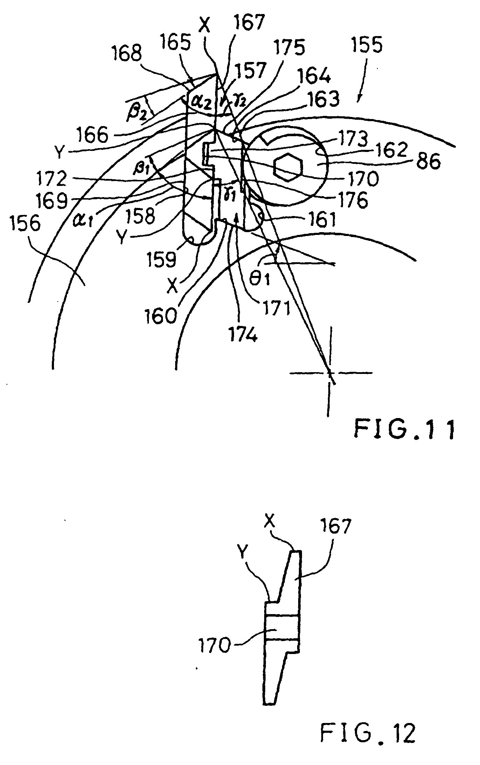

FIG. 11 shows a fourth embodiment of the invention as applied to a profile cutter 155. The profile cutter 155 comprises a cutter body 156 having a tip diameter of 160 mm with blade grooves 157 formed therein. Each of the blade grooves 157 has a vertical rear surface 158 in the direction of rotation, a generally U-shaped relief recess 159 extending from the lower end of the rear surface 158, a bottom surface or slant 160 inclined downwardly at a predetermined angle θ1 (= 22°30') from the front end of the recess 159 in the direction of rotation, an arcuate recess 161 formed to be continuous with the slant 160, a circular recess 162 formed on the front surface side thereof in the direction of rotation to be open to the blade groove 157, and an eave-like projection 163 having a slant 164 parallel to the slant 160 and formed on the outer peripheral edge thereof to extend into the blade groove 157.

A blade 165 has a tip X on the upper and lower ends thereof and a cutting side face 166 on the side thereof. Each of the tips X has an included angle α2 of 52°06', a clearance angle β2 of 17°54' and a rake angle γ2 of 20°. The blade 165 has a cutting face 167 and a flank 168 on each tip X, and a common back face 169 for contacting the rear surface 158. Further, a tip Y is formed on the lower portion of the cutting side face 166. The tip Y has a tip diameter of 140 mm and has an included angle α1 of 50°, a clearance angle β1 of 17° and a rake angle γ1 of 23°. An engagement recess 170 is formed between the two cutting faces 167 for receiving a clamping wedge 171.

The clamping wedge 171 has a blade joining surface 172 which has an engagement projection 173 formed at a predetermined height position thereof for engagement with the engagement recess 170 of the blade 165. The clamping wedge 171 also has a slant 174 extending from the lower end of the joining surface 172 for sliding contact with the slant 160 of the blade groove 157, and a slant 175 extending from the upper end of the joining surface 172 for sliding contact with the slant 164 of the projection 163 extending into the blade groove 157. The clamping wedge 171 also has a recess 176 formed between the slants 174 and 175 for receiving the disc cam 86. The engagement projection 173 of the clamping wedge 171 is engaged with the engagement recess 170 of the blade 165. In this state, the blade 165 is inserted into the blade groove 157 from the side thereof as the slants 174 and 175 of the clamping wedge 171 are brought in sliding contact with the slant 164 of the blade groove 157 inclined at the angle θ1 and the slant 164 of the projection 163, respectively. The disc cam 86 is then rotated so as to press the blade 165 and the clamping wedge 147 to be fixed.

In this case, if the tips X and Y have the same clearance angle β of 20° and the same included angle α of 50° and the slants have the same inclination angle θ = 25°24', when the cutting face is sharpened by 2 mm in total by several sharpening operations, the cutting radius at the tip X is increased by 0.028 mm while the cutting radius at the tip Y is increased by 0.144 mm. However, by setting the included angles α1 and α2, the clearance angles β1 and β2 and the rake angles γ1 and γ2 of the tips X and Y as specified above, the displacements of the cutting radius at the tips X and Y can be made substantially the same, 0.028 mm at the tip X and 0.034 mm at the tip Y.

In the above embodiments, the slants having an inclination angle θ relative to line C that is perpendicular to the rear surface of the blade groove are formed either in the blade groove bottom surface and the clamping wedge or in the blade and the clamping wedge. However, this feature is not a limitation, and the slants may be formed both in the blade groove bottom surface and the clamping wedge and in the blade and the clamping wedge. Such an example is explained with reference to FIG. 13.

A cutter body 181 of a milling cutter 180 shown in FIG. 13 has blade grooves 182 spaced 90° apart in the circumferential direction from each other. Each of the blade grooves 182 has a generally vertical rear surface 183 in the direction of rotation, a relief recess extending from the lower end of the rear surface 183, a bottom surface or slant 185 extending from the recess 184 and inclined upwardly at a predetermined angle θa relative to line C that is perpendicular to the rear surface 183, a front surface 186 in the direction of rotation extending from the end of the slant 185 toward the outer periphery and parallel to the rear surface 183, and an eave-like projection 187 having a slant 188 parallel to the slant 185 and formed on the outer peripheral edge thereof to extend into the blade groove 182.

A blade 190 is formed into a generally parallelogram shape in cross-section which comprises a vertical back face 191 to abut against the rear surface 183 of the blade groove 182, a cutting face 192 parallel to the back face 191, and slants 193 formed on the top and bottom thereof as viewed in the drawing and inclined at a predetermined angle θb relative to line C that is perpendicular to the rear surface 183. With this construction, inversion of the blade 190 permits a second cutting operation with the same blade 190.

A clamping wedge 195 has a blade receiving portion 198 defined by a blade joining surface 196 that abuts against the cutting face 192 of the blade 190 and a slant 197 extending from the lower end of the joining surface 196 and inclined at a predetermined angle θb relative to line C that is perpendicular to the rear surface 183 of the blade groove 182 for sliding contact with the slant 193 of the blade 190. The clamping wedge 195 also has a bottom surface comprising a slant 199 formed for sliding contact with the slant 185 of the blade groove 182. Further, the clamping wedge 195 has a front surface 200, an upper surface 201 on the outer periphery, and a receiving recess 202 formed at the corner between the surfaces 200 and 201 for receiving the projection 187. The receiving recess 202 has a slant 203 formed for sliding contact with the slant 188 of the projection 187. Here, the slant 185 is formed at a predetermined angle θa (tan θb - tan θa = tan (β+γ) - tan γ) relative to line C that is perpendicular to the rear surface 183. The tip of the blade 190 has an included angle a of 50°, a clearance angle β of 20° and a rake angle γ of 20°, while θa = 20° and θb = 40°. In the above-described first to fourth embodiments and modifications, θa = 0° or θb = 0°.

With this construction, when the cutting face is sharpened by 2 mm in total by several sharpening operations, the cutting face of the blade 190 is reduced by 2 mm, and the clamping wedge 195 slides by the same distance toward the rear surface 183 along the bottom surface or slant 185 of the blade groove 182, and the blade 190 also slides outwardly along the rear surface 183 with the slant 193 thereof in sliding contact with the slant 197 of the clamping wedge 195. As a result, the cutting radius is kept substantially unchanged with increase of 0.028 mm, while, in the prior art in which the change in cutting radius by sharpening is not compensated, the cutting radius is reduced by 0.855 mm.

Thus, the change in cutting radius by sharpening the cutting face of the blade 190 can be compensated both by the blade groove bottom surface or slant 185 and the bottom surface or slant 199 of the clamping wedge 195 that abuts against the slant 185 and by the slant 193 of the blade 190 and the slant 197 of the blade receiving portion 198 of the clamping wedge 195.

In the above embodiments, the angles θ, θa and θb are mainly set such that the tip comes onto the tangential line of the cutting circle of the tip positioned at the initial position. However, as mentioned above, these angles may be suitably adjusted.

Further, the present invention may be applied to a blade having a side rake.

## Claims

**1.** An inserted milling cutter (11), comprising a cutter body (12) having a plurality of blade grooves (13) formed in the outer periphery thereof, a clamping wedge (26) received within each of the blade grooves, a blade (21) pressed against and fixed to a rear surface of each blade groove in the direction of rotation by the clamping wedge (26), and means (17, 18, 33) for fixedly holding the clamping wedge, wherein means for compensating for a change in cutting radius when a cutting face of the blade is sharpened is constituted by a first slant (19) formed on a bottom surface of each blade groove and a second slant (31) formed on the clamping wedge that abuts against the first slant, **characterized in that**

the first slant (19) and the second slant (31) define an angle θ relative to a direction perpendicular to the rear surface (14) of the blade groove, the angle θ being defined such that upon sliding of the clamping wedge (26) along the slant (19) the tip of the sharpened blade defines a path (L, L") which is a tangential line (L) of the cutting circle (D) of the tip positioned at the initial position (P) or which is a line (L") defining a path of the tip in which the tip at the time of final use is positioned on the cutting circle (D) for the tip at the initial position (P), or which is a line between these lines (L, L").

2. An inserted milling cutter (41), comprising a cutter body (42) having a plurality of blade grooves (43) formed in the outer periphery thereof, a clamping wedge (57) received within each of the blade grooves, a blade (51) pressed against and fixed to a rear surface of each blade groove in the direction of rotation by the clamping wedge (97), and means (47, 48, 62) for fixedly holding the clamping wedge, **characterized in that** means for compensating for a change in cutting radius when a cutting face of the blade is sharpened is constituted by a first slant (56) formed on the blade and a second slant (64) formed on the clamping wedge that abuts against the first slant, and

the first slant (56) and the second slant (64), define an angle θ relative to a direction perpendicular to the rear surface (44) of the blade groove, the angle θ being defined such that upon sliding of the clamping edge (57) along the slant (56), the tip of the sharpened blade defines a path (L, L") which is a tangential line (L) of the cutting circle (D) of the tip positioned at the initial position (P) or which is a line (L") defining a path of the tip in which the tip at the time of final use is positioned on the cutting circle (D) for the tip at the initial position (P), or which is a line between these lines (L, L").

3. An inserted milling cutter (180), comprising a cutter body (181) having a plurality of blade grooves (182) formed in the outer periphery thereof, a clamping wedge (195) received within each of the blade grooves, a blade (190) pressed against and fixed to a rear surface of each blade groove in the direction of rotation by the clamping wedge (195), and means for fixedly holding the clamping wedge, **characterized in that** means for compensating for a change in cutting radius when a cutting face of the blade is sharpened is constituted both by a first slant (185) formed on a bottom surface of each blade groove (182) and a second slant (199) formed on the clamping wedge (195) that abuts against the first slant and by a third slant (193) formed on the blade and a fourth slant (197) formed on the clamping wedge (195) that abuts against the third slant (193), and

the first slant (185) and the second slant (199), define an angle θa relative to a direction (C) perpendicular to the rear surface of the blade groove, respectively, and the third slant (193) and the fourth slant (197) define an angle θb relative to a direction (C) perpendicular to the rear surface of the blade groove, respectively, the angles θa, θb being defined such that upon sliding of the clamping wedge (196) along the slants, the tip of the sharpened blade defines a path (L, L") which is a tangential line (L) of the cutting circle (D) of the tip positioned at the initial position (P) or which is a line (L, L") defining a path of the tip in which the tip at the time of final use is positioned on the cutting circle (D) for the tip at the initial position (P), or which is a line between these lines (L, L").

4. An inserted milling cutter according to claim 1 **characterized in that** the blade groove has a front surface (138) in the direction of rotation which has an eave-like slant (140) generally parallel to the slant of the blade groove bottom surface (137), and that the clamping wedge (147) is configured to close the blade groove in the direction of the outer periphery whenever the clamping wedge slides along and is then fixed to the slant of the blade groove bottom surface.

5. The milling cutter according to any one of the preceding claims, wherein, similar to a profile cutter in which the blade has tips located in different radial positions thereof, a clearance angle (β) and an included angle (α) at an outside diameter of one of said tips are determined to be different from those of the other tip in order to further compensate for differences in the amount of compensation for changes in cutting radius between the tips of the blade, such differences being caused by differences in radial position between the tips of the blade.

**Patentansprüche**

1. Fräse (11) mit Schneideinsätzen, enthaltend einen Schneidekörper (12), der eine Mehrzahl von Blattnuten (13) aufweist, die in seinem äußeren Umfang geformt sind, einen Klemmkeil (26), der innerhalb jeder der Blattnuten aufgenommen ist, ein Blatt (21), das gegen eine hintere Oberfläche jeder Blattnut in der Rotationsrichtung durch den Klemmkeil (26) gedrückt wird und festgelegt wird, und Mittel (17, 18, 33) zum festgelegten Halten des Klemmkeils, wobei Mittel zum Kompensieren einer Veränderung im Schneidradius, wenn eine Schneidfläche des Blatts geschärft wird, durch eine erste Schräge (19) gebildet werden, die auf einer Bodenoberfläche jeder Blattnut geformt ist, und eine zweite Schräge (31) gebildet werden, die auf dem Klemmkeil geformt ist, die gegen die erste Schräge stößt, **dadurch gekennzeichnet, dass**
die erste Schräge (19) und die zweite Schräge (31) einen Winkel θ relativ zu einer Richtung senkrecht zur hinteren Oberfläche (14) der Blattnut definieren, wobei der Winkel θ derart definiert ist, dass bei einem Verschieben des Klemmkeils (26) entlang der Schräge (19) die Spitze des geschärften Blatts einen Weg (L, L") definiert, der eine tangentiale Linie (L) des Schneidkreises (D) der an der Ausgangsposition (P) positionierten Spitze ist, oder der eine Linie (L") ist, die einen Weg der Spitze definiert, in welchem die Spitze zum Zeitpunkt der abschließenden Verwendung auf dem Schneidkreis (D) für die Spitze an der Anfangsposition (P) positioniert ist, oder der eine Linie zwischen diesen Linien (L, L") ist.

2. Fräse (41) mit Schneideinsätzen, enthaltend einen Schneidekörper (42), der eine Mehrzahl von Blattnuten (43) aufweist, die in seinem äußeren Umfang geformt sind, einen Klemmkeil (57), der innerhalb jeder der Blattnuten aufgenommen ist, ein Blatt (51), das gegen eine hintere Oberfläche jeder Blattnut in der Rotationsrichtung durch den Klemmkeil (57) gedrückt wird und festgelegt wird, und Mittel (47, 48, 62) zum festgelegten Halten des Klemmkeils, **dadurch gekennzeichnet, dass**
Mittel zum Kompensieren einer Veränderung im Schneidradius, wenn eine Schneidfläche des Blatts geschärft wird, durch eine erste Schräge (56), die auf dem Blatt geformt ist, und eine zweite Schräge (64), die auf dem Klemmkeil geformt ist, die gegen die erste Schräge stößt, gebildet werden, und
die erste Schräge (56) und die zweite Schräge (64) einen Winkel θ relativ zu einer Rich tung senkrecht zu der hinteren Oberfläche (44) der Blattnut definieren, wobei der Winkel θ derart definiert ist, dass bei einem Verschieben des Klemmkeils (57) entlang der Schräge (56) die Spitze des geschärften Blatts einen Weg (L, L") definiert, der eine tangentiale Linie (L) des Schneidkreises (D) der an der Ausgangsposition (P) positionierten Spitze ist, oder der eine Linie (L") ist, die einen Weg der Spitze definiert, in welchem die Spitze zum Zeitpunkt der abschließenden Verwendung auf dem Schneidkreis (D) für die Spitze an der Anfangsposition (P) positioniert ist, oder der eine Linie zwischen diesen Linien (L, L") ist.

3. Fräse (180) mit Schneideinsätzen, enthaltend einen Schneidekörper (181), der eine Mehrzahl von Blattnuten (182) aufweist, die in seinem äußeren Umfang geformt sind, einen Klemmkeil (195), der innerhalb jeder der Blattnuten aufgenommen ist, ein Blatt (190), das gegen eine hintere Oberfläche jeder Blattnut in der Rotationsrichtung durch den Klemmkeil (195) gedrückt wird und festgelegt wird, und Mittel zum festgelegten Halten des Klemmkeils, **dadurch gekennzeichnet, dass**
Mittel zum Kompensieren einer Veränderung im Schneidradius, wenn eine Schneidfläche des Blatts geschärft wird, durch sowohl eine erste Schräge (185), die auf einer Bodenoberfläche jeder Blattnut (182) und eine zweite Schräge (199), die auf dem Klemmkeil (195) gebildet ist, die gegen die erste Schräge stößt, als auch durch eine dritte Schräge (193), die auf dem Blatt geformt ist, und eine vierte Schräge (197), die auf dem Klemmkeil (195) geformt ist, die gegen die dritte Schräge (193) stößt, gebildet werden, und die erste Schräge (185) und die zweite Schräge (199) einen Winkel θa relativ zu einer Richtung (C) senkrecht zur hinteren Oberfläche der Blattnut jeweils definieren, und die dritte Schräge (193) und die vierte Schräge (197) einen Winkel θb relativ zu einer Richtung (C) senkrecht zu der hinteren Oberfläche der Blattnut jeweils definieren, wobei die Winkel θa, θb derart definiert sind, dass bei einem Verschieben des Klemmkeils (195) entlang der Schrägen die Spitze des geschärften Blatts einen Weg (L, L") definiert, der eine tangentiale Linie (L) des Schneidkreises (D) der in der Ausgangsposition (P) positionierten Spitze ist, oder der eine Linie (L, L") ist, die einen Weg der Spitze definiert, in welchem die Spitze zum Zeitpunkt der abschließenden Verwendung auf dem Schneidkreis (D) für die Spitze an der Ausgangsposition (P) positioniert ist, oder der eine Linie zwischen diesen Linien (L, L") ist.

4. Fräse mit Schneideinsätzen nach Anspruch 1, **dadurch gekennzeichnet, dass** die Blattnut eine vordere Oberfläche (138) in der Rotationsrichtung aufweist, die eine traufenartige Schräge im Wesentlichen parallel zu der Schräge der Bodenoberfläche (137) der Blattnut aufweist, und dass der Klemmkeil (147) konfiguriert ist, dass er die Blattnut in der Richtung des äußeren Umfangs schließt, wann immer der Klemmkeil entlang gleitet und dann an der Schräge der Bodenfläche der Blattnut befestigt ist.

5. Fräse mit Schneideinsätzen nach einem der vorhergehenden Ansprüche, wobei, ähnlich zu einem Profilschneider, in welchem das Blatt Spitzen hat, die sich in unterschiedlichen radialen Positionen davon befinden, ein Zwischenraumwinkel (β) und ein eingeschlossener Winkel (α) an einem außenseitigen Durchmesser von einer der Spitzen derart bestimmt sind, dass sie unterschiedlich zu denjenigen der anderen Spitze sind, um weiter Unterschiede in der Kompensationsmenge bezüglich Veränderungen im Schneidradius zwischen den Spitzen des Blatts zu kompensieren, wobei solche Unterschiede durch Unterschiede in der radialen Position zwischen den Spitzen des Blatts hervorgerufen werden.

## Revendications

**1.** Fraise à dents rapportées (11), comprenant un corps de fraise (12) ayant une pluralité de logements de lame (13) formés dans la périphérie extérieure de celui-ci, un coin de serrage (26) reçu à l'intérieur de chacun des logements de lame, une lame (21) appuyée contre et fixée à une surface arrière de chaque logement de lame dans la direction de rotation par le coin de serrage (26), et un moyen (17, 18, 33) permettant de maintenir fixement le coin de serrage, dans laquelle un moyen permettant de compenser un changement de rayon de coupe lorsqu'une face de coupe de la lame est affûtée est constitué d'une première oblique (19) formée sur une surface inférieure de chaque logement de lame et d'une deuxième oblique (31) formée sur le coin de serrage qui vient en butée contre la première oblique, **caractérisée en ce que**
la première oblique (19) et la deuxième oblique (31) définissent un angle θ par rapport à une direction perpendiculaire à la surface arrière (14) du logement de lame, l'angle θ étant défini de telle sorte que, lors du coulissement du coin de serrage (26) le long de l'oblique (19), la pointe de la lame affûtée définit un trajet (L, L") qui est une ligne tangentielle (L) du cercle de coupe (D) de la pointe positionnée dans la position initiale (P), ou qui est une ligne (L") définissant un trajet de la pointe dans lequel la pointe, lors de l'utilisation finale, est positionnée sur le cercle de coupe (D) pour la pointe dans la position initiale (P), ou qui est une ligne entre ces lignes (L, L").

**2.** Fraise à dents rapportées (41), comprenant un corps de fraise (42) ayant une pluralité de logements de lame (43) formés dans la périphérie extérieure de celui-ci, un coin de serrage (57) reçu à l'intérieur de chacun des logements de lame, une lame (51) appuyée contre et fixée à une surface arrière de chaque logement de lame dans la direction de rotation par le coin de serrage (57), et un moyen (47, 48, 62) permettant de maintenir fixement le coin de serrage, **caractérisée en ce qu'**un moyen permettant de compenser un changement de rayon de coupe lorsqu'une face de coupe de la lame est affûtée est constitué d'une première oblique (56) formée sur une surface inférieure de chaque logement de lame et d'une deuxième oblique (64) formée sur le coin de serrage qui vient en butée contre la première oblique, et
la première oblique (56) et la deuxième oblique (64) définissent un angle θ par rapport à une direction perpendiculaire à la surface arrière (44) du logement de lame, l'angle θ étant défini de telle sorte que, lors du coulissement du coin de serrage (57) le long de l'oblique (56), la pointe de la lame affûtée définit un trajet (L, L") qui est une ligne tangentielle (L) du cercle de coupe (D) de la pointe positionnée dans la position initiale (P), ou qui est une ligne (L") définissant un trajet de la pointe dans lequel la pointe, lors de l'utilisation finale, est positionnée sur le cercle de coupe (D) pour la pointe dans la position initiale (P), ou qui est une ligne entre ces lignes (L, L").

**3.** Fraise à dents rapportées (180), comprenant un corps de fraise (181) ayant une pluralité de logements de lame (182) formés dans la périphérie extérieure de celui-ci, un coin de serrage (195) reçu à l'intérieur de chacun des logements de lame, une lame (190) appuyée contre et fixée à une surface arrière de chaque logement de lame dans la direction de rotation par le coin de serrage (195), et un moyen permettant de maintenir fixement le coin de serrage, **caractérisée en ce qu'**un moyen permettant de compenser un changement de rayon de coupe lorsqu'une face de coupe de la lame est affûtée est constitué d'une première oblique (185) formée sur une surface inférieure de chaque logement de lame (182) et d'une deuxième oblique (199) formée sur le coin de serrage (195) qui vient en butée contre la première oblique, ainsi que d'une troisième oblique (193) formée sur la lame et d'une quatrième oblique (197) formée sur le coin de serrage (195) qui vient en butée contre la troisième oblique (193), et la première oblique (185) et la deuxième oblique (199) définissent un angle θa par rapport à une direction (C) perpendiculaire à la surface arrière du logement de lame, respectivement, et la troisième oblique (193) et la quatrième oblique (197) définissent un angle θb par rapport à une direction (C) perpendiculaire à la surface arrière du logement de lame, respectivement, les angles θa et θb étant définis de telle sorte que, lors du coulissement du coin de serrage (195) le long des obliques, la pointe de la lame affûtée définit un trajet (L, L") qui est une ligne tangentielle (L) du cercle de coupe (D) de la pointe positionnée dans la position initiale (P), ou qui est une ligne (L,L") définissant un trajet de la pointe dans lequel la pointe, lors de l'utilisation finale, est positionnée sur le cercle de coupe (D) pour la pointe dans la position initiale (P), ou qui est une ligne entre ces lignes (L, L").

**4.** Fraise à dents rapportées selon la revendication 1, **caractérisée en ce que** le logement de lame a une surface avant (138) dans la direction de rotation qui a une oblique de type avant-toit (140), généralement parallèle à l'oblique de la surface inférieur (137) du logement de lame, et **en ce que** le coin de serrage (147) est configuré pour fermer le logement de lame dans la direction de la périphérie extérieure, lorsque le coin de serrage coulisse le long de, puis est fixé à l'oblique de la surface inférieure du logement de lame.

**5.** Fraise à dents selon l'une quelconque des revendications précédentes, dans laquelle, comme dans une fraise de forme dans laquelle la lame a des pointes situées dans différentes positions radiales de celle-ci, un angle de dégagement ($\beta$) et un angle inclus ($\alpha$) à un diamètre extérieure d'une desdites pointes sont déterminés de manière à être différents de ceux de l'autre pointe, afin de compenser davantage les différences dans la quantité de compensation des changements dans le rayon de coupe entre les pointes de la lame, de telles différences étant provoquées par des différences dans la position radiale entre les pointes de la lame.

FIG.1

FIG. 2

FIG. 3

FIG.4

FIG.5

FIG.6

FIG.7

FIG.8

FIG.9

FIG.10

EP 0 938 956 B1

FIG.11

FIG.12

20

FIG.13

FIG.14

FIG.15(a)

FIG.15(b)